# EUROPEAN PATENT SPECIFICATION

(11) **EP 3 935 574 B1**
(45) Date of publication and mention of the grant of the patent: **11.11.2026**
(21) Application number: 20715509.4
(22) Date of filing: 17.02.2020
(51) Int. Cl.: G06N 3/049, G06N 7/01, G06N 3/063, G06N 3/047, G06N 3/042, G06N 3/0499, G06N 3/09

(54) **NETWORK -COMPOSITION. MODULE FOR A BAYESIAN NEUROMORPHIC COMPILER**
NETZWERKZUSAMMENSETZUNG MODUL FÜR EINEN BAYESISCHEN NEUROMORPHEN COMPILER
COMPOSITION DE RÉSEAU MODULE POUR UN COMPILATEUR NEUROMORPHIQUE BAYÉSIEN

(30) Priority: 05.03.2019 US 201962814091 P; 06.03.2019 US 201916294815; 06.03.2019 US 201916294886
(43) Date of publication of application: 12.01.2022
(73) Proprietor: HRL Laboratories, LLC, Malibu, CA 90265 (US)
(72) Inventor: STEPP, Nigel, D., Santa Monica, CA 90403 (US); JAMMALAMADAKA, Aruna, Agoura Hills, CA 91301 (US)
(74) Representative: Boult Wade Tennant LLP
(86) International application number: PCT/US2020/018528
(87) International publication number: WO 2020/180479

(56) References cited:
- NIGEL STEPP ET AL: "A Dynamical Systems Approach to Neuromorphic Computation of Conditional Probabilities", PROCEEDINGS OF THE INTERNATIONAL CONFERENCE ON NEUROMORPHIC SYSTEMS , ICONS '18, vol. 4, 23 July 2018 (2018-07-23), New York, New York, USA, pages 1 - 4, XP055651552, ISBN: 978-1-4503-6544-4, DOI: 10.1145/3229884.3229891
- YU ZHAOFEI ET AL: "Implementation of Bayesian Inference In Distributed Neural Networks", 2018 26TH EUROMICRO INTERNATIONAL CONFERENCE ON PARALLEL, DISTRIBUTED AND NETWORK-BASED PROCESSING (PDP), IEEE, 21 March 2018 (2018-03-21), pages 666 - 673, XP033353802, DOI: 10.1109/PDP2018.2018.00111
- GUO SHANGQI ET AL: "Hierarchical Bayesian Inference and Learning in Spiking Neural Networks", IEEE TRANSACTIONS ON CYBERNETICS, IEEE, PISCATAWAY, NJ, USA, vol. 49, no. 1, 1 January 2019 (2019-01-01), pages 133 - 145, XP011700733, ISSN: 2168-2267, [retrieved on 20181213], DOI: 10.1109/TCYB.2017.2768554
- RAJESH P N RAO: "Hierarchical Bayesian Inference in Networks of Spiking Neurons", 1 January 2005 (2005-01-01), XP055704175, Retrieved from the Internet <URL:https://www.ece.uvic.ca/~bctill/papers/mocap/Rao_2005a.pdf>

## Description

### BACKGROUND OF INVENTION

### (1) Field of Invention

The present invention relates to a system for automatically translating Bayesian network models into neuromorphic computing models and, more particularly, to a system for automatically translating Bayesian network models into neuromorphic computing models using a Bayesian Neuromorphic Compiler.

### (2) Description of Related Art

A Bayesian network is a probabilistic graphical model that represents a set of variables and their conditional dependencies via a directed acyclic graph (DAG). Bayesian probability theory has emerged as a framework for describing perception, reasoning, and learning of mammals.

There are existing systems that create a high-level language for specifying Bayesian models, but they target conventional computing hardware, such as a general purpose central processing units (CPU) or graphics processing units (GPU). A group at Graz University is working on theoretical mappings between Bayesian inference algorithms and neuronal dynamics; however, their most recent work (Pecevski and Maass, "Learning probabilistic inference through spike-timing-dependent plasticity", eNeuro 25 March 2016, 3(2) E0048 - 15.2016 1 - 35 ; hereinafter referred to as Pecevski and Maass), utilizes population coded static distributions, and has not been shown to work for non-stationary relationships between random variables. The work of Pecevski and Maass requires careful manual specification of the neuronal network structure, which then only applies to very specific datasets or use-cases.

NIGEL STEPP ET AL: "A Dynamical Systems Approach to Neuromorphic Computation of Conditional Probabilities",PROCEEDINGS OF THE INTERNATIONAL CONFERENCE ON NEUROMORPHIC SYSTEMS , ICONS '18, vol. 4, 23 July 2018 (2018-07-23), pages 1-4, New York, New York, USA DOI: 10.1145/3229884.3229891ISBN: 978-1-4503-6544-4, discloses a spiking-neural-network realisation of Bayesian inference that hierarchically composes probabilistic computation units (C-M pairs) to learn joint distributions and read conditional probabilities.

Thus, a continuing need exists for a programming model that automatically translates Bayesian network models into neuromorphic computing models for enabling users who are not familiar with neuronal properties to leverage neural computations.

### SUMMARY OF INVENTION

The present invention relates to a system in accordance with independent claim 1.

In another aspect, controlling the device includes causing the device to perform a maneuvering operation based on the at least one computed conditional probability.

In another aspect, the device is an autonomous mobile platform, and the maneuvering operation is a collision avoidance operation.

Finally, the present invention also includes a computer program product in accordance with independent claim 7 and a computer implemented method in accordance with independent claim 4.

### BRIEF DESCRIPTION OF THE DRAWINGS

The objects, features and advantages of the present invention will be apparent from the following detailed descriptions of the various aspects of the invention in conjunction with reference to the following drawings, where:
FIG. 1 is a block diagram depicting the components of a system for automatically translating Bayesian network models into neuromorphic computing models according to some embodiments of the present disclosure;
FIG. 2 is an illustration of a computer program product according to some embodiments of the present disclosure;
FIG. 3A is an illustration of a probabilistic computation unit (PCU) that can be decomposed into C and M subunits according to some embodiments of the present disclosure;
FIG. 3B is an illustration of C and M subunits re-composed according to some embodiments of the present disclosure;
FIG. 4A is an illustration of a chain-like model composed as a simple chain of PCUs according to some embodiments of the present disclosure;
FIG. 4B is an illustration of computation of *P*(*D*|*A*) using learned models to stand in for observed variables according to some embodiments of the present disclosure;
FIG. 5A is an illustration of a triangle-shaped model corresponding to a mediating or moderating cause according to some embodiments of the present disclosure;
FIG. 5B is an illustration of computation which requires input from multiple learned models according to some embodiments of the present disclosure;
FIG. 6A is an illustration depicting a process according to some embodiments of the present disclosure as applied to arbitrary directed acyclic graphs (DAGs);
FIG. 6B is an illustration of a readout network for computation of *P*(*F*|*A*) according to some embodiments of the present disclosure;
FIG. 7A is an illustration of an underlying model learned from six simulated random variables according to some embodiments of the present disclosure;
FIG. 7B is an illustration of results from computation of a path in the model shown in FIG. 7A according to some embodiments of the present disclosure;
FIG. 8 is a flow diagram illustrating a system for automatically translating Bayesian network models into neuromorphic computing models according to some embodiments of the present disclosure;
FIG. 9 is an illustration of a device being controlled based on a computed conditional probability according to some embodiments of the present disclosure; and
FIG. 10 is an illustration of a spiking network for an N-ary AND according to some embodiments of the present disclosure.

### DETAILED DESCRIPTION

The present invention relates to a system for automatically translating Bayesian network models into neuromorphic computing models, and more particularly, to a system for automatically translating Bayesian network models into neuromorphic computing models using a Bayesian Neuromorphic Compiler. The following description is presented to enable one of ordinary skill in the art to make and use the invention and to incorporate it in the context of particular applications. Various modifications, as well as a variety of uses in different applications will be readily apparent to those skilled in the art, and the general principles defined herein may be applied to a wide range of aspects. Thus, the present invention is not intended to be limited to the aspects presented, but is only defined by the appended claims.

In the following detailed description, numerous specific details are set forth in order to provide a more thorough understanding of the present invention. However, it will be apparent to one skilled in the art that the present invention may be practiced without necessarily being limited to these specific details. In other instances, well-known structures and devices are shown in block diagram form, rather than in detail, in order to avoid obscuring the present invention.

### (1) Principal Aspects

Various embodiments of the invention include three "principal" aspects. The first is a system for automatically translating Bayesian network models into neuromorphic computing models. The system is typically in the form of a computer system operating software or in the form of a "hard-coded" instruction set. This system may be incorporated into a wide variety of devices that provide different functionalities. The second principal aspect is a method, typically in the form of software, operated using a data processing system (computer). The third principal aspect is a computer program product. The computer program product generally represents computer-readable instructions stored on a non-transitory computer-readable medium such as an optical storage device, e.g., a compact disc (CD) or digital versatile disc (DVD), or a magnetic storage device such as a floppy disk or magnetic tape. Other, non-limiting examples of computer-readable media include hard disks, read-only memory (ROM), and flash-type memories. These aspects will be described in more detail below.

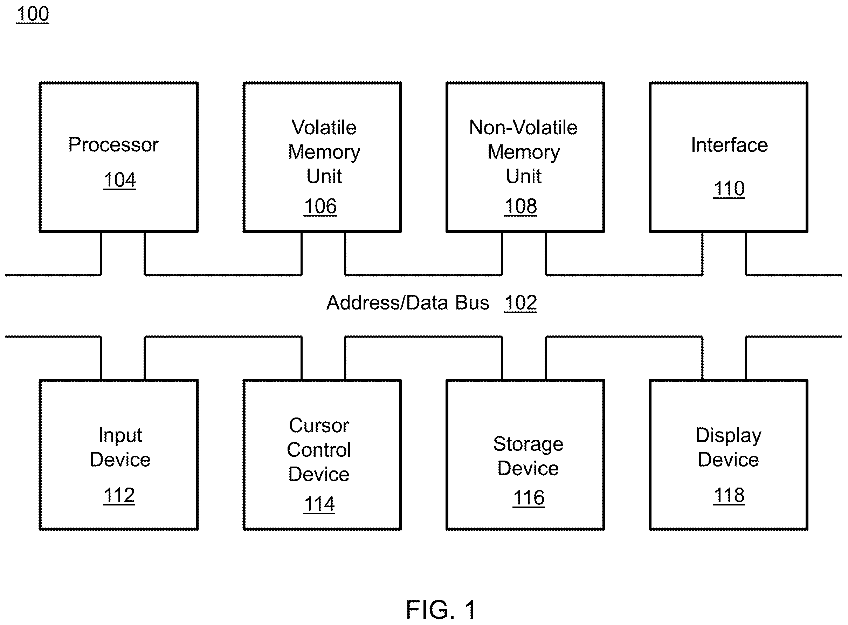

A block diagram depicting an example of a system (i.e., computer system 100) of the present invention is provided in FIG. 1. The computer system 100 is configured to perform calculations, processes, operations, and/or functions associated with a program or algorithm. In one aspect, certain processes and steps discussed herein are realized as a series of instructions (e.g., software program) that reside within computer readable memory units and are executed by one or more processors of the computer system 100. When executed, the instructions cause the computer system 100 to perform specific actions and exhibit specific behavior, such as described herein.

The computer system 100 may include an address/data bus 102 that is configured to communicate information. Additionally, one or more data processing units, such as a processor 104 (or processors), are coupled with the address/data bus 102. The processor 104 is configured to process information and instructions. In an aspect, the processor 104 is a microprocessor. Alternatively, the processor 104 may be a different type of processor such as a parallel processor, application-specific integrated circuit (ASIC), programmable logic array (PLA), complex programmable logic device (CPLD), a field programmable gate array (FPGA), a general purpose neuromorphic processor, and a processor composed of Probabilistic Computation Units (PCUs) in ASIC form (i.e., a PCU-dedicated processor).

The computer system 100 is configured to utilize one or more data storage units. The computer system 100 may include a volatile memory unit 106 (e.g., random access memory ("RAM"), static RAM, dynamic RAM, etc.) coupled with the address/data bus 102, wherein a volatile memory unit 106 is configured to store information and instructions for the processor 104. The computer system 100 further may include a non-volatile memory unit 108 (e.g., read-only memory ("ROM"), programmable ROM ("PROM"), erasable programmable ROM ("EPROM"), electrically erasable programmable ROM "EEPROM"), flash memory, etc.) coupled with the address/data bus 102, wherein the non-volatile memory unit 108 is configured to store static information and instructions for the processor 104. Alternatively, the computer system 100 may execute instructions retrieved from an online data storage unit such as in "Cloud" computing. In an aspect, the computer system 100 also may include one or more interfaces, such as an interface 110, coupled with the address/data bus 102. The one or more interfaces are configured to enable the computer system 100 to interface with other electronic devices and computer systems. The communication interfaces implemented by the one or more interfaces may include wireline (e.g., serial cables, modems, network adaptors, etc.) and/or wireless (e.g., wireless modems, wireless network adaptors, etc.) communication technology.

In one aspect, the computer system 100 may include an input device 112 coupled with the address/data bus 102, wherein the input device 112 is configured to communicate information and command selections to the processor 104. In accordance with one aspect, the input device 112 is an alphanumeric input device, such as a keyboard, that may include alphanumeric and/or function keys. Alternatively, the input device 112 may be an input device other than an alphanumeric input device. In an aspect, the computer system 100 may include a cursor control device 114 coupled with the address/data bus 102, wherein the cursor control device 114 is configured to communicate user input information and/or command selections to the processor 104. In an aspect, the cursor control device 114 is implemented using a device such as a mouse, a track-ball, a track-pad, an optical tracking device, or a touch screen. The foregoing notwithstanding, in an aspect, the cursor control device 114 is directed and/or activated via input from the input device 112, such as in response to the use of special keys and key sequence commands associated with the input device 112. In an alternative aspect, the cursor control device 114 is configured to be directed or guided by voice commands.

In an aspect, the computer system 100 further may include one or more optional computer usable data storage devices, such as a storage device 116, coupled with the address/data bus 102. The storage device 116 is configured to store information and/or computer executable instructions. In one aspect, the storage device 116 is a storage device such as a magnetic or optical disk drive (e.g., hard disk drive ("HDD"), floppy diskette, compact disk read only memory ("CD-ROM"), digital versatile disk ("DVD")). Pursuant to one aspect, a display device 118 is coupled with the address/data bus 102, wherein the display device 118 is configured to display video and/or graphics. In an aspect, the display device 118 may include a cathode ray tube ("CRT"), liquid crystal display ("LCD"), field emission display ("FED"), plasma display, or any other display device suitable for displaying video and/or graphic images and alphanumeric characters recognizable to a user.

The computer system 100 presented herein is an example computing environment in accordance with an aspect. However, the non-limiting example of the computer system 100 is not strictly limited to being a computer system. For example, an aspect provides that the computer system 100 represents a type of data processing analysis that may be used in accordance with various aspects described herein. Moreover, other computing systems may also be implemented. Indeed, the scope of the present technology is not limited to any single data processing environment, but only limited by the appended claims. Thus, in an aspect, one or more operations of various aspects of the present technology are controlled or implemented using computer-executable instructions, such as program modules, being executed by a computer. In one implementation, such program modules include routines, programs, objects, components and/or data structures that are configured to perform particular tasks or implement particular abstract data types. In addition, an aspect provides that one or more aspects of the present technology are implemented by utilizing one or more distributed computing environments, such as where tasks are performed by remote processing devices that are linked through a communications network, or such as where various program modules are located in both local and remote computer-storage media including memory-storage devices.

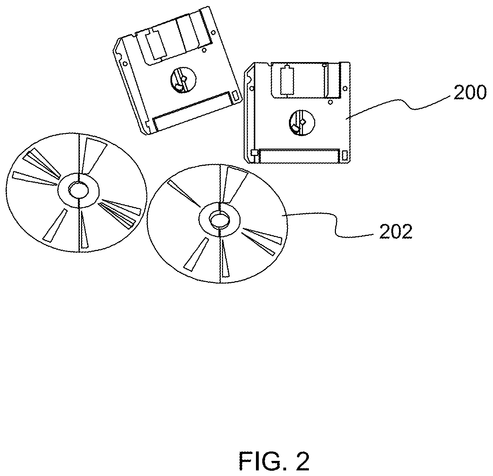

An illustrative diagram of a computer program product (i.e., storage device) embodying the present invention is depicted in FIG. 2. The computer program product is depicted as floppy disk 200 or an optical disk 202 such as a CD or DVD. However, as mentioned previously, the computer program product generally represents computer-readable instructions stored on any compatible non-transitory computer-readable medium. The term "instructions" as used with respect to this invention generally indicates a set of operations to be performed on a computer, and may represent pieces of a whole program or individual, separable, software modules. Non-limiting examples of "instruction" include computer program code (source or object code) and "hard-coded" electronics (i.e. computer operations coded into a computer chip). The "instruction" is stored on any non-transitory computer-readable medium, such as in the memory of a computer or on a floppy disk, a CD-ROM, and a flash drive. In either event, the instructions are encoded on a non-transitory computer-readable medium.

### (2) Specific Details of Various Embodiments

Described is a Bayesian Neuromorphic Compiler (BNC) that takes as input a Bayesian network model, or particular computation thereon, and produces a spiking neural network topology and configuration that implements that model or computation. The programming model for the BNC was defined in U.S.

Application Publication No. US2019318235A1, which describes Probabilistic Computatio Units, or "PCUs" being neuromorphic computing circuits configured to compute the conditional probabilities, such that each PCU is comprised of a C subunit and an M subunit, the M subunit being a multiplier unit configured to compute a logical conjunction of two input processes and to output a signal corresponding to the joint occurrence of the input processes, the C subunit being a convergence unit configured to receive a signal corresponding to a logical conjunction of the two input processes and a signal corresponding to one of the input processes, and to adjust an associated synaptic weight so that the weight converges to a value determined by said signals, such that within the PCU that value represents a conditional probability between the input processes.

In the present disclosure, a new module for the BNC is described, which is able to chain components of Probabilistic Computation Units or "PCUs" to perform learning and inference for any directed, acyclic Bayesian Network model. A user may specify such a Bayesian network model via the programming model (as described in U.S. Application Publication No. US2019318235A1), and the network composition module, which is a part of the neuromorphic compiler, will combine PCU components in such a way that it learns the conditional probabilities of that model and is, subsequently, able to readout ("infer") probabilities pertaining to any valid query for that Bayesian network.

The invention described herein enables an end-user who is skilled in the art of constructing Bayesian network models to take advantage of particular spiking neural networks that perform Bayesian computations. There are existing high-level programming languages for specifying Bayesian models, such as described by Tran et al. in "Edward: A Library for Probabilistic Modeling, Inference, and Criticism," 2016, arXiv 1610.09787.

However, existing high-level programming languages target conventional computing hardware, such as a general purpose central processing unit (CPU) or graphics processing unit (GPU). By targeting the special purpose spiking neuronal network, the user may compute more efficiently and at a larger scale. The invention, in conjunction with the programming model described in U.S. Application Publication No. US2019318235A1 allows the user to do so without knowledge of the details of the underlying neuronal network.

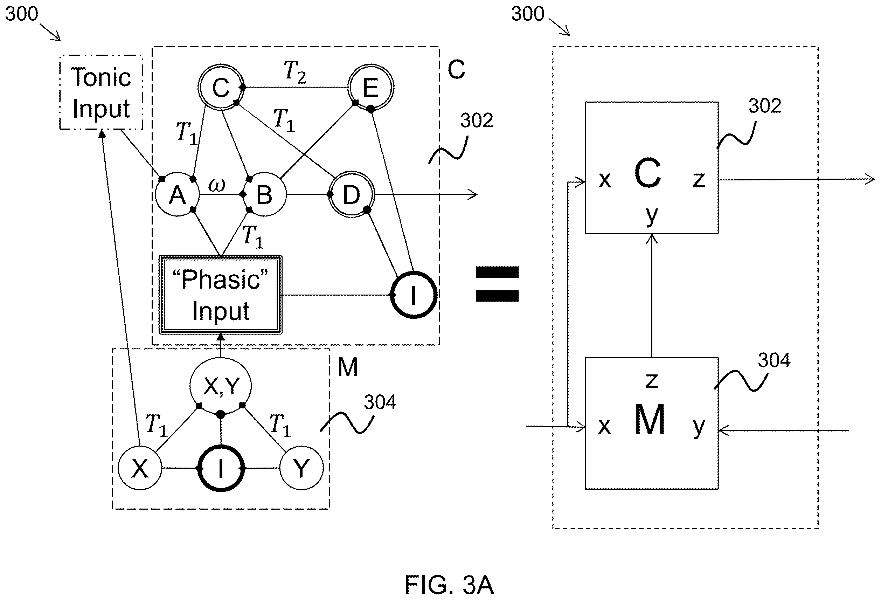

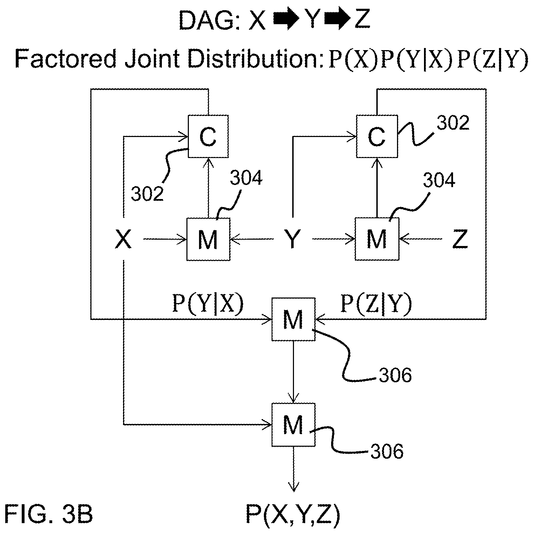

This invention consists of system and method for creating hierarchical compositions of PCUs, which are neuromorphic computing circuits designed to compute conditional probabilities. As described above, this invention is an extension of a previous description of a PCU-based programming model described in U.S. Application Publication No. US2019318235A1. The PCU itself, with the C and M subunits, are illustrated in FIGs. 3A and 3B. FIG. 3A depicts the PCU (element 300), which can be further decomposed into a C subunit (element 302) and a M subunit (element 304). FIG. 3B shows the C subunit (element 302) and M subunit (element 304) re-composed to implement the learning and computation of arbitrary conditional factorings. It is assumed that an underlying probabilistic model consists of a Directed Acyclic Graph (DAG), where arrows correspond to conditional dependence between model variables. Hierarchical composition, in this case, reflects that such a model can contain multi-level dependencies, as opposed to a completely flat model, where the PCUs are dependent on one another in the sense that the output of one PCU acts as input into another PCU.

### (2.1) Composition of Probabilistic Computation Units

Each learning neuronal network consists of at least one PCU for each conditional probability. A PCU is also referred to as a C-M unit, where C refers to a convergence unit and M denotes a multiplier unit (i.e., logical AND). The learning neuronal network consists of some number of PCUs (C-M) connected by additional M units for computing joint probabilities of binary variables depending on the computation being performed (and as specified by the pseudocode described below). FIG. 3A depicts a single PCU (element 300) comprising a C-M unit (elements 302 and 304, respectively), which computes the conditional probability of two variables. FIG. 3B depicts computation of the joint probability of three variables P(X, Y, Z), which is the probability that X, Y, and Z will spike together. In FIG. 3B, the learning neuronal network comprises an additional M unit (element 306) for computing joint probabilities of binary variables. As stated above, the learning neuronal network refers to either a single PCU or the composition of PCUs.

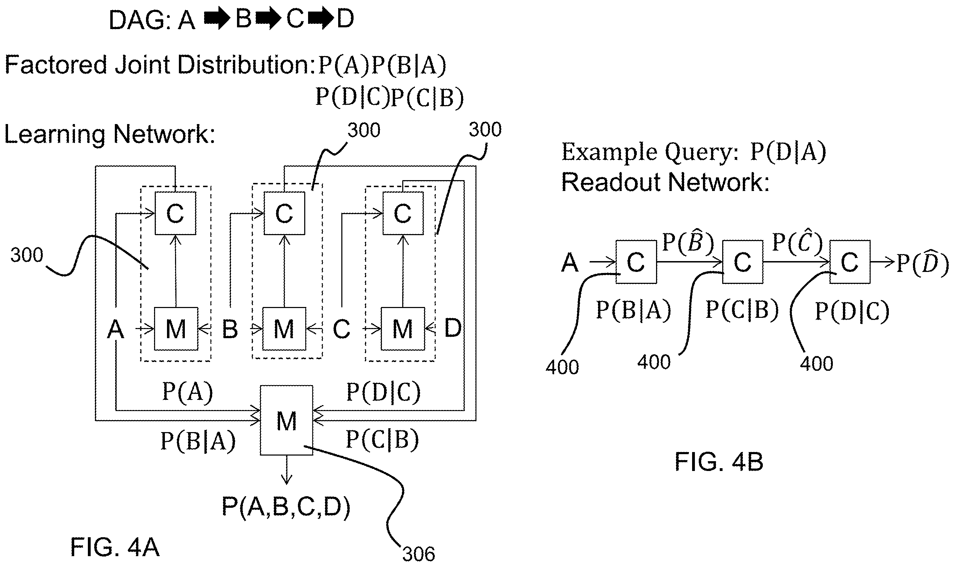

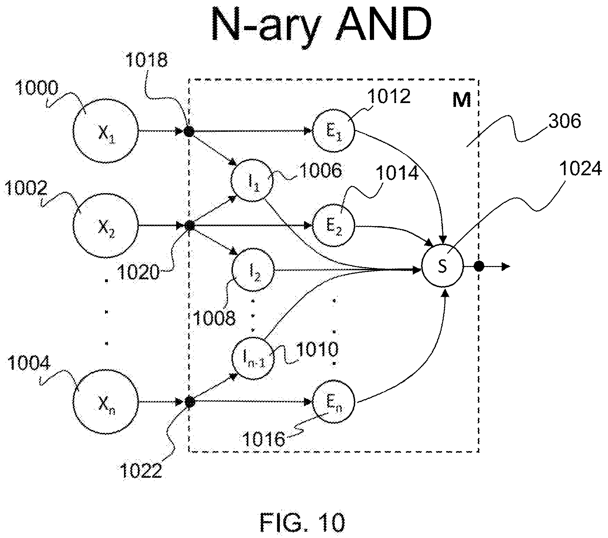

FIG. 4A illustrates a chain-like model composed as a simple chain of PCUs (element 300), where the additional M unit (element 306) should be considered an N-ary AND. The spiking network for the N-ary AND is depicted in FIG. 10. For each additional input (elements 1000, 1002, and 1004) included in the M unit (element 306), one inhibitory connection (I) (elements 1006, 1008, and 1010 and one excitatory connection (E) (elements 1012, 1014, and 1016) is added. In addition, a synapse (elements 1018, 1020, and 1022) from each new input is added to the new neuron, S (element 1024). An additional synapse from the previous input to the new inhibitory neuron is also added. FIG. 4B depicts computation of *P*(*D*|*A*), using learned models to stand in for observed variables. In a second readout (inference) mode, the neuronal network consists of only synaptic weights from learned C subunits (element 302), as shown in FIG. 4B. For instance, given a simple chain topology as an underlying model, FIGs. 4A and 4B illustrate how such a model can be learned and, subsequently, used for inference.

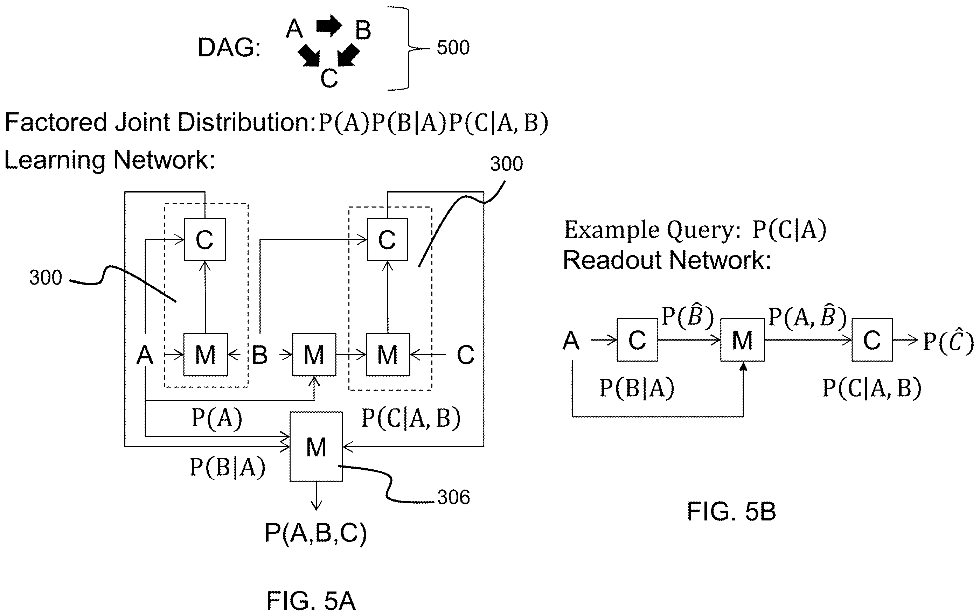

As a first step towards hierarchy, FIGs. 5A and 5B show the required setup for a mediating situation (A causes C, but A also causes B, which causes C). Specifically, FIG. 5A depicts a triangle-shaped model corresponding to a mediating or moderating cause. FIG. 5B illustrates computation which requires input from multiple learned models. P(C|A,B) is the probability that variable/event C happens given that events A and B happen. *P*(*A, B̂*) is the probability that events A and B happen at the same time, using the estimated probability of B. The "hat" notation indicates that the probability is estimated by the system.

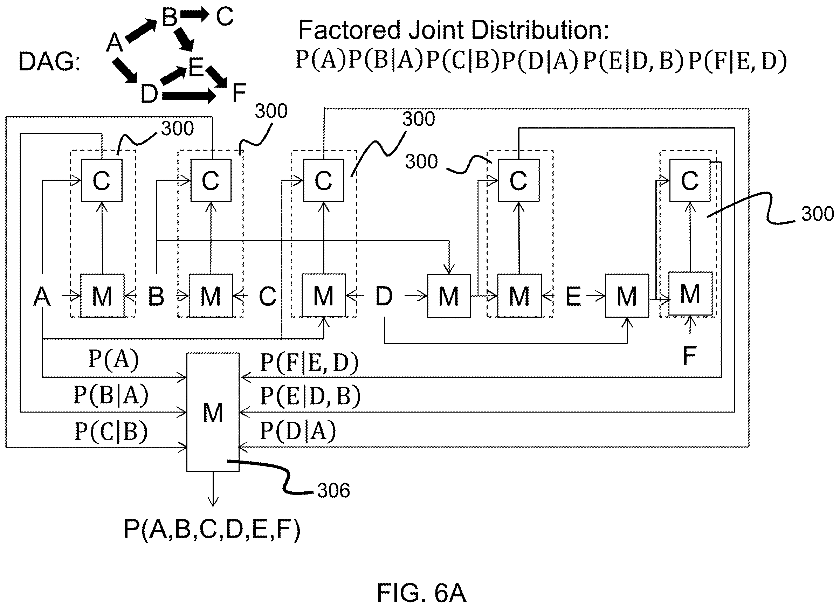

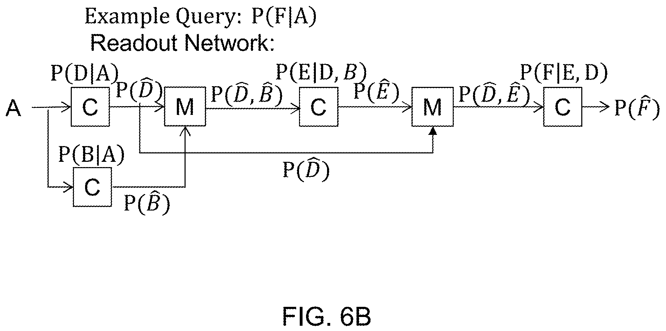

Finally, FIG. 6A shows a non-trivial model with the corresponding decomposition into a combination of C and M subunits, or PCUs (element 300). FIG. 6B illustrates the readout network for computing *P*(*F*|*A*). In general, such circuits may be generated using the following grammar and construction algorithm, as would be understood by one skilled in the art. Backus-Naur Form (BNF) is a notation technique for context-free grammars used to describe the syntax of languages used in computing. 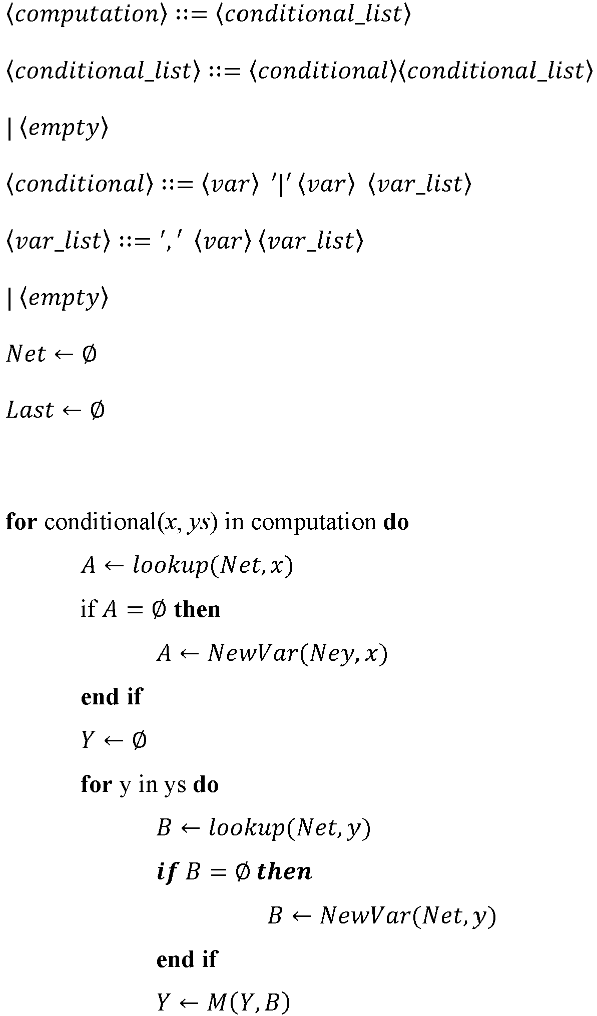 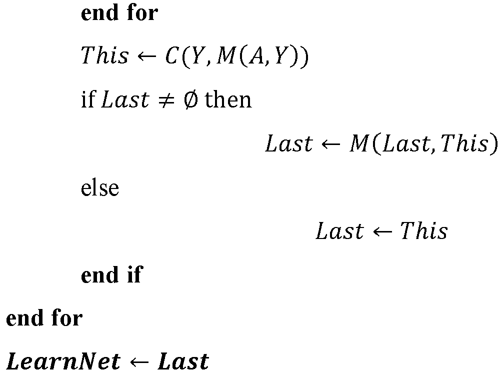 The algorithm for taking the learned C units and constructing a readout network is detailed below.

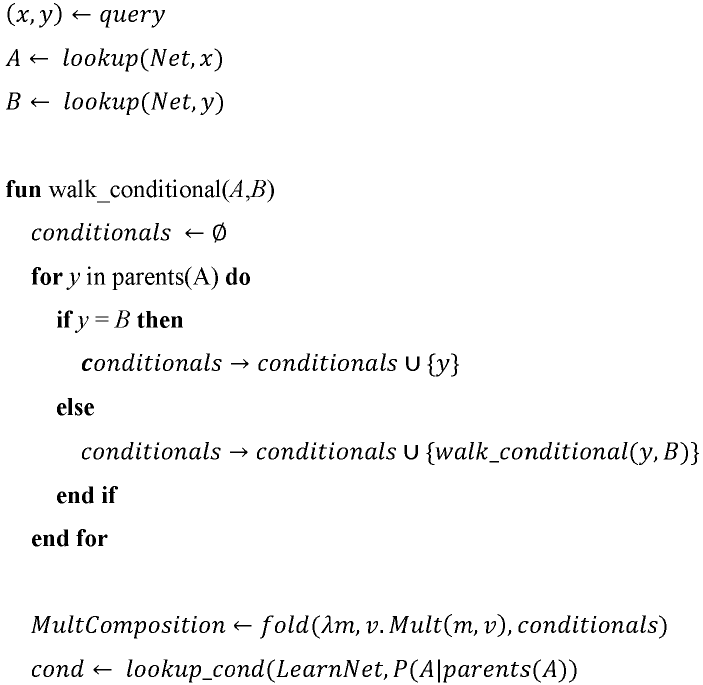

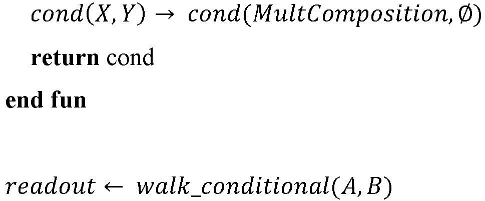

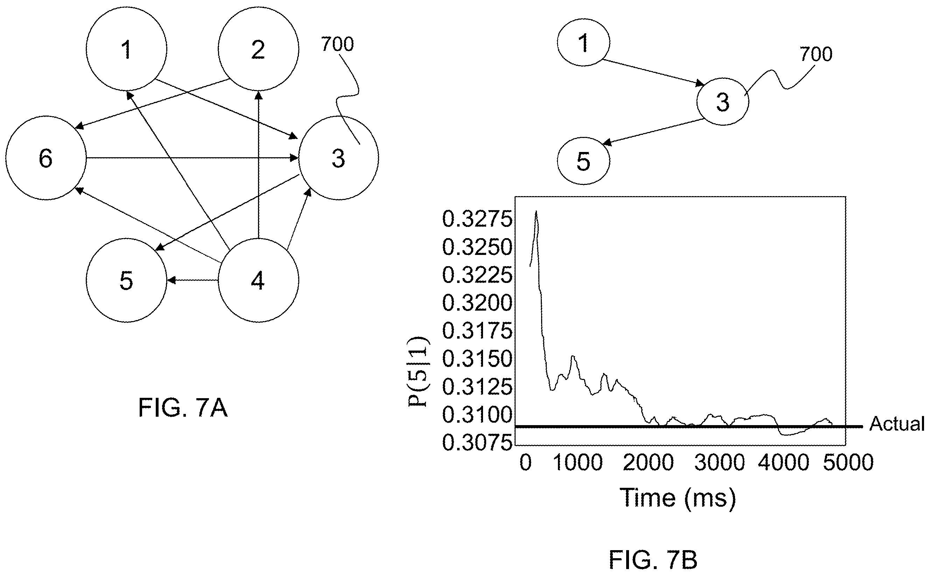

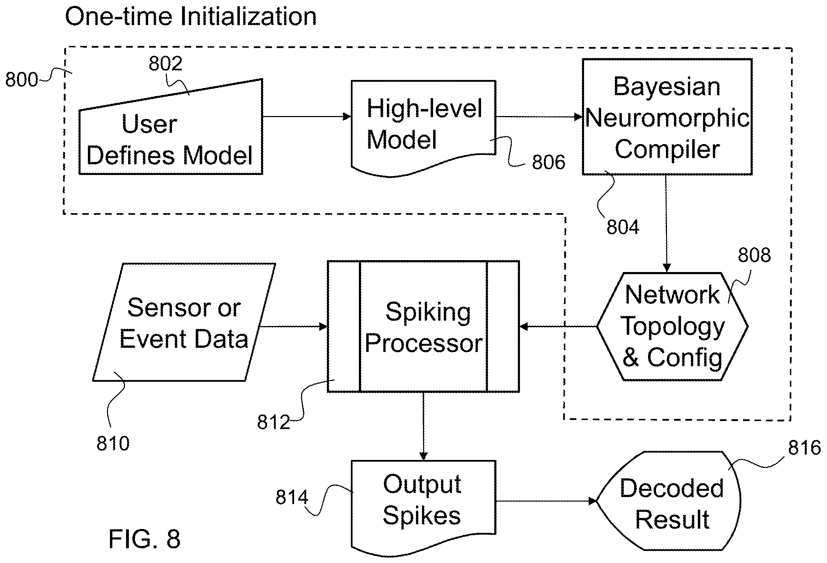

The system and method described herein can be implemented as a multi-step process beginning with learning of the underlying model, or DAG, followed by specific queries supported by that learning (e.g., P(5|1) in FIG. 7B). The steps proceed as follows.
1. (Optional) Learn underlying model by feeding in known observations from historical data (FIG. 7A, where each numbered circle represents a variable (e.g., variable 3 (element 700)).
2. Provided a learned or specified model, any pair of variables may be queried for conditional probability, provided there is a directed path in the model (FIG. 7B, top).
3. By running the algorithm above, a neuromorphic structure can be built which computes the desired conditional (FIG. 7B, bottom). FIG. 7B shows the output of the readout network corresponding to the query P(5|1). FIG. 8 depicts the end-to-end system in which the method is applied.

As shown in FIG. 8, in a one-time initialization (element 800), a user defines (element 802) or specifies a Bayesian network model. The Bayesian Neuromorphic Compiler (element 804) takes as input the high-level Bayesian network model (element 806), or particular computation thereon, and produces a spiking neural network topology and configuration (element 808) that implements that model or computation. Given the spiking neural network topology and configuration (element 808) and sensor or event data (element 810), a spiking processor (element 812) performs Bayesian computations and outputs spikes (element 814), which are then transformed into decoded results (element 816), which can be utilized by, for instance, an autonomous mobile platform. Non-limiting examples of sensor data include temperature and acceleration. Non-limiting examples of event data include occurrences of error messages or state change times.

The invention according to embodiments of the present disclosure can be applied to any program that requires learning of or computing over discrete-valued, dynamic, directed, acyclic Bayesian network models. Non-limiting examples of applications include autonomous driving and fault diagnostics. By targeting efficient and scalable neural systems, the invention described herein has particular benefit for mobile, autonomous, and power-constrained platforms. For instance, the system described herein can be incorporated into mobile autonomous platforms (e.g., drones, unmanned aerial vehicles (UAVs)) and autonomous vehicles).

Probabilistic neuronal computation of the type described herein results in lower power and higher speed inferences, making it easily transition to various Size, Weight and Power (SWaP) constrained platforms of interest to vehicle manufacturers and government agencies. Non-limiting examples of these are autonomous systems (i.e., autonomous mobile platforms) for ground, aerial, and underwater vehicles and vehicle health diagnostics and prognostics (e.g., sensory and fault modalities, structure learning of maintenance messages). Additionally, adaptive mission planning for autonomous underwater vehicles (AUVs) and unmanned aerial vehicles (UAVs) via scenario and behavior understanding. Further commercial applications include portable medical diagnostics machines.

Complex systems, such as aircrafts or other vehicles, often record maintenance and fault messages from a few thousand different sources, including various sensor types. The occurrence of these messages over time can be treated as a random process corresponding to an input spike train. The spiking neural network topology and configuration according to embodiments of the present disclosure can be used to determine which of these message sources are highly dependent on which other sources (diagnostics) during Mode 1 ("learning"), and, in turn, be used for prognostics (e.g., if see fault X occur, what is the updated likelihood of seeing fault Y?) during Mode 2 ("readout"). For instance, if a fault is detected in one mechanical vehicle component (e.g., engine, brakes, steering mechanism, tire) that is associated with another mechanical vehicle component (e.g., engine, brakes, steering mechanism, tire), then an alert can be generated for the user. The alert can be an audible alert (e.g., beep, tone, voice) and/or a visual alert displayed on a screen/dashboard of the vehicle. The visual alert can be a signal light or a textual message. Alternatively, the alert can be a warning message or instructions to the vehicle operator (e.g., driver, pilot) indicating a vehicle component malfunction with detailed instructions regarding an operation to perform (e.g., power off the vehicle, perform a steering operation, perform a braking operation, obtain mechanical service) or, in other aspects, the system can initiate and be caused to perform the specified operation (such as powering off the vehicle or causing the vehicle to steer, etc.). Furthermore, a new conditional probability between a first input data stream from a first vehicle sensor and a third input data stream obtained from a third vehicle sensor can be determined based on the learned conditional probability between a first and second input data stream from first and second vehicle sensors.

In addition, in a non-limiting example of an autonomous mobile platform having multiple sensors, such as cameras. Based on the likelihood of one sensor detecting an object and/or obtaining sensor measurement data that is conditional on or related to another sensor detecting an object and/or obtaining a sensor measurement data, the system can cause the autonomous vehicle to perform a vehicle operation. For instance, if two vehicle sensors detect the same object, object detection and classification accuracy is increased and the system described herein can cause a precise vehicle maneuver for collision avoidance by controlling a vehicle component. For example, if the object is a stop sign, the system may cause the autonomous vehicle to apply a functional response or maneuvering operation, such as a braking operation to stop the vehicle. Other appropriate responses may include one or more of a steering operation, a throttle operation to increase speed or to decrease speed, or a decision to maintain course and speed without change. The responses may be appropriate for avoiding a collision, improving travel speed, or improving efficiency.

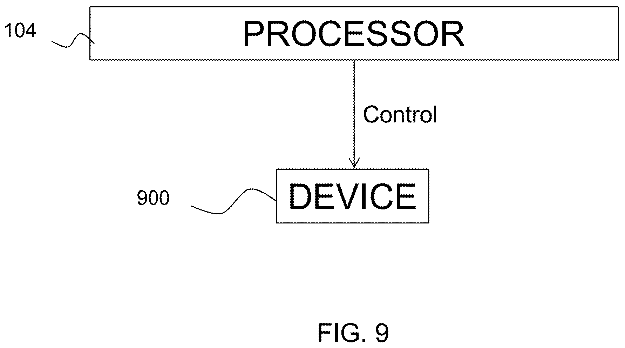

FIG. 9 is a flow diagram illustrating using a processor 104 to control a autonomous mobile device 900 based on the determined conditional probability of two variables. Non-limiting examples of autonomous mobile devices 900 that can be controlled via the processor 104 include a vehicle or a vehicle component, such as a brake, a steering mechanism, suspension, or safety device (e.g., airbags, seatbelt tensioners, etc.). Further, the vehicle could be an unmanned aerial vehicle (UAV), an autonomous ground vehicle, or a human operated vehicle controlled either by a driver or by a remote operator. As can be appreciated by one skilled in the art, control of other device types is also possible.

Finally, while this invention has been described in terms of several embodiments, one of ordinary skill in the art will readily recognize that the invention may have other applications in other environments. It should be noted that many embodiments and implementations are The invention is defined and limited by the scope of the appended claims.

## Claims

1. A system (100) for specifying control of a device based on a Bayesian network model (806), the system comprising:
a Bayesian neuromorphic compiler (804), embodied on a non-transitory computer-readable medium and having a network composition module configured to combine a plurality of probabilistic computation units, PCUs (300), in a hierarchical composition containing multi-level dependencies, the Bayesian neuromorphic compiler (804) comprising instructions to cause one or more processors (104) to perform operations of:
receiving an arbitrary Bayesian network model (806) as input;
producing a spiking neural network topology and configuration (808), by combining the PCUs (300) with additional M units (306), wherein the configuration (808) implements the Bayesian network model (806), and is configured to learn conditional probabilities of the Bayesian network model;
using the network composition module, learning conditional probabilities of the Bayesian network model (806) by the configuration (808) of the PCUs (300) and the additional M units (306);
building a structure of additional M subunits (306) and C subunits (302) of the PCUs (300) having learned synaptic weights for a query for the Bayesian network model (806), wherein the structure is configured to compute a conditional probability corresponding to the query;
computing, using the structure, at least one conditional probability corresponding to the query; and
controlling a device based on the at least one computed conditional probability;
wherein the PCUs (300) are neuromorphic computing circuits configured to compute the conditional probabilities, such that each PCU (300) is comprised of a C subunit (302) and an M subunit (304),
the M subunit (304) being a multiplier unit configured to compute a logical conjunction of two input processes and to output a signal corresponding to the joint occurrence of the input processes,
the C subunit (302) being a convergence unit configured to receive a signal corresponding to a logical conjunction of the two input processes and a signal corresponding to one of the input processes, and to adjust an associated synaptic weight so that the weight converges to a value determined by said signals,
such that within the PCU (300) that value represents a conditional probability between the input processes.

2. The system as set forth in Claim 1, wherein controlling the device includes causing the device to perform a maneuvering operation based on the at least one computed conditional probability.

3. The system as set forth in Claim 2, wherein the device is an autonomous mobile platform (900), and the maneuvering operation is a collision avoidance operation.

4. A computer implemented method for specifying control of a device based on a Bayesian network model (806), the method comprising acts of:
using a Bayesian neuromorphic compiler (804), embodied on a non-transitory computer-readable medium and having a network composition module configured to combine a plurality of probabilistic computation units, PCUs (300), in a hierarchical composition containing multi-level dependencies, the Bayesian neuromorphic compiler (804) comprising instructions to cause one or more processors to perform operations of:
receiving an arbitrary Bayesian network model (806) as input;
producing a spiking neural network topology and configuration (808), by combining the PCUs (300) with additional M units (306), wherein the configuration (808) implements the Bayesian network model, and is configured to learn conditional probabilities of the Bayesian network model (806);
using the network composition module, learning conditional probabilities of the Bayesian network model (806) by the configuration (808) of the PCUs (300) and the additional M units (306);
building a structure of additional M subunits (306) and C subunits (302) of the PCUs (300) having learned synaptic weights for a query for the Bayesian network model (806), wherein the structure is configured to compute a conditional probability corresponding to the query;
computing, using the structure, at least one conditional probability corresponding to the query; and
controlling a device based on the at least one computed conditional probability;
wherein the PCUs (300) are neuromorphic computing circuits configured to compute the conditional probabilities, such that each PCU (300) is comprised of a C subunit (302) and an M subunit (304),
the M subunit (304) being a multiplier unit configured to compute a logical conjunction of two input processes and to output a signal corresponding to the joint occurrence of the input processes,
the C subunit (302) being a convergence unit configured to receive a signal corresponding to a logical conjunction of the two input processes and a signal corresponding to one of the input processes, and to adjust an associated synaptic weight so that the weight converges to a value determined by said signals,
such that within the PCU (300) that value represents a conditional probability between the input processes.

5. The method as set forth in Claim 4, wherein controlling the device includes causing the device to perform a maneuvering operation based on the at least one computed conditional probability.

6. The method as set forth in Claim 5, wherein the device is an autonomous mobile platform (900), and the maneuvering operation is a collision avoidance operation.

7. A computer program product for specifying control of a device based on a Bayesian network model (806), the computer program product comprising:
a Bayesian neuromorphic compiler (804), embodied on a non-transitory computer-readable medium and having a network composition module configured to combine a plurality of probabilistic computation units, PCUs (300), in a hierarchical composition containing multi-level dependencies, the Bayesian neuromorphic compiler (804) comprising instructions to cause one or more processors to perform operations of:
receiving an arbitrary Bayesian network model (806) as input;
producing a spiking neural network topology and configuration (808), by combining the PCUs (300) with additional M units (306), wherein the configuration (808) implements the Bayesian network model (806), and is configured to learn conditional probabilities of the Bayesian network model (806);
using the network composition module, learning conditional probabilities of the Bayesian network model (806) by the configuration (808) of the PCUs (300) and the additional M units (306);
building a structure of additional M subunits (306) and C subunits (302) of the PCUs (300) having learned synaptic weights for a query for the Bayesian network model (806), wherein the structure is configured to compute a conditional probability corresponding to the query;
computing, using the structure, at least one conditional probability corresponding to the query; and
controlling a device based on the at least one computed conditional probability;
wherein the PCUs (300) are neuromorphic computing circuits configured to compute the conditional probabilities, such that each PCU (300) is comprised of a C subunit (302) and an M subunit (304),
the M subunit (304) being a multiplier unit configured to compute a logical conjunction of two input processes and to output a signal corresponding to the joint occurrence of the input processes,
the C subunit (302) being a convergence unit configured to receive a signal corresponding to a logical conjunction of the two input processes and a signal corresponding to one of the input processes, and to adjust an associated synaptic weight so that the weight converges to a value determined by said signals,
such that within the PCU (300) that value represents a conditional probability between the input processes.

8. The computer program product as set forth in Claim 7, wherein controlling the device includes causing the device to perform a maneuvering operation based on the at least one computed conditional probability.

9. The computer program product as set forth in Claim 8, wherein the device is an autonomous mobile platform (900), and the maneuvering operation is a collision avoidance operation.

## Patentansprüche

1. System (100) zum Spezifizieren der Steuerung einer Vorrichtung basierend auf einem Bayes'schen Netzwerkmodell (806), wobei das System umfasst:
einen Bayes'scher neuromorphen Kompilierer (804), der auf einem nichtflüchtigen computerlesbaren Medium verkörpert ist und ein Netzwerkkompositionsmodul aufweist, das dazu konfiguriert ist, eine Vielzahl von probabilistischen Recheneinheiten, PCUs (300), in einer hierarchischen Komposition zu kombinieren, die mehrstufige Abhängigkeiten enthält, wobei der Bayes'sche neuromorphe Kompilierer (804) Anweisungen umfasst, um einen oder mehrere Prozessoren (104) zu veranlassen, folgende Operationen durchzuführen:
Empfangen eines beliebigen Bayes'sches Netzwerkmodells (806) als Eingang;
Erstellen einer spikenden neuronalen Netzwerktopologie und -konfiguration (808) durch Kombinieren der PCUs (300) mit zusätzlichen M Einheiten (306), wobei die Konfiguration (808) das Bayes'sche Netzwerkmodell (806) implementiert und dazu konfiguriert ist, bedingte Wahrscheinlichkeiten des Bayes'schen Netzwerkmodells zu lernen;
unter Verwendung des Netzwerk-Kompositionsmoduls, Lernen bedingter Wahrscheinlichkeiten des Bayes'schen Netzwerkmodells (806) durch die Konfiguration (808) der PCUs (300) und der zusätzlichen M Einheiten (306);
Aufbauen einer Struktur zusätzlicher M Untereinheiten (306) und C Untereinheiten (302) der PCUs (300), die für eine Anfrage an das Bayes'sche Netzwerkmodell (806) gelernte synaptische Gewichte aufweisen, wobei die Struktur dazu konfiguriert ist, eine der Anfrage entsprechende bedingte Wahrscheinlichkeit zu berechnen;
Berechnen, unter Verwendung der Struktur, mindestens einer bedingten Wahrscheinlichkeit, die der Anfrage entspricht; und
Steuern einer Vorrichtung, basierend auf der mindestens einen berechneten bedingten Wahrscheinlichkeit;
wobei die PCUs (300) neuromorphe Rechenschaltungen sind, die dazu konfiguriert sind, die bedingten Wahrscheinlichkeiten zu berechnen, sodass jede PCU (300) eine C Untereinheit (302) und eine M Untereinheit (304) umfasst,
die M Untereinheit (304) eine Multiplizierereinheit ist, die dazu konfiguriert ist, eine logische Verknüpfung zweier Eingabeprozesse zu berechnen und ein Signal auszugeben, das dem gemeinsamen Auftreten der Eingabeprozesse entspricht,
die C Untereinheit (302) eine Konvergenzeinheit ist, die dazu konfiguriert ist, ein Signal zu empfangen, das einer logischen Verknüpfung der zwei Eingabeprozesse entspricht, sowie ein Signal, das einem der Eingabeprozesse entspricht, und ein zugehöriges synaptisches Gewicht so anzupassen, dass das Gewicht gegen einen durch die Signale bestimmten Wert konvergiert,
sodass innerhalb der PCU (300) der Wert eine bedingte Wahrscheinlichkeit zwischen den Eingabeprozessen darstellt.

2. System nach Anspruch 1, wobei Steuern der Vorrichtung beinhaltet, die Vorrichtung zu veranlassen, eine Manövrieroperation basierend auf der mindestens einen berechneten bedingten Wahrscheinlichkeit durchzuführen.

3. System nach Anspruch 2, wobei die Vorrichtung eine autonome mobile Plattform (900) ist und die Manövrieroperation eine Kollisionsvermeidungsoperation ist.

4. Computerimplementiertes Verfahren zum Spezifizieren der Steuerung einer Vorrichtung basierend auf einem Bayes'schen Netzwerkmodell (806), wobei das Verfahren folgende Handlungen umfasst:
Verwenden eines Bayes'schen neuromorphen Kompilierers (804), der auf einem nichtflüchtigen computerlesbaren Medium verkörpert ist und ein Netzwerkkompositionsmodul aufweist, das dazu konfiguriert ist, eine Vielzahl von probabilistischen Recheneinheiten, PCUs (300), in einer hierarchischen Komposition zu kombinieren, die mehrstufige Abhängigkeiten enthält, wobei der Bayes'sche neuromorphe Kompilierer (804) Anweisungen umfasst, um einen oder mehrere Prozessoren zu veranlassen, folgende Operationen durchzuführen:
Empfangen eines beliebigen Bayes'sches Netzwerkmodells (806) als Eingang;
Erstellen einer spikenden neuronalen Netzwerktopologie und -konfiguration (808) durch Kombinieren der PCUs (300) mit zusätzlichen M Einheiten (306), wobei die Konfiguration (808) das Bayes'sche Netzwerkmodell implementiert und dazu konfiguriert ist, bedingte Wahrscheinlichkeiten des Bayes'schen Netzwerkmodells (806) zu lernen;
unter Verwendung des Netzwerk-Kompositionsmoduls, Lernen bedingter Wahrscheinlichkeiten des Bayes'schen Netzwerkmodells (806) durch die Konfiguration (808) der PCUs (300) und der zusätzlichen M Einheiten (306);
Aufbauen einer Struktur zusätzlicher M Untereinheiten (306) und C Untereinheiten (302) der PCUs (300), die für eine Anfrage an das Bayes'sche Netzwerkmodell (806) gelernte synaptische Gewichte aufweisen, wobei die Struktur dazu konfiguriert ist, eine der Anfrage entsprechende bedingte Wahrscheinlichkeit zu berechnen;
Berechnen, unter Verwendung der Struktur, mindestens einer bedingten Wahrscheinlichkeit, die der Anfrage entspricht; und
Steuern einer Vorrichtung, basierend auf der mindestens einen berechneten bedingten Wahrscheinlichkeit;
wobei die PCUs (300) neuromorphe Rechenschaltungen sind, die dazu konfiguriert sind, die bedingten Wahrscheinlichkeiten zu berechnen, sodass jede PCU (300) eine C Untereinheit (302) und eine M Untereinheit (304) umfasst,
die M Untereinheit (304) eine Multiplizierereinheit ist, die dazu konfiguriert ist, eine logische Verknüpfung zweier Eingabeprozesse zu berechnen und ein Signal auszugeben, das dem gemeinsamen Auftreten der Eingabeprozesse entspricht,
die C Untereinheit (302) eine Konvergenzeinheit ist, die dazu konfiguriert ist, ein Signal zu empfangen, das einer logischen Verknüpfung der zwei Eingabeprozesse entspricht, sowie ein Signal, das einem der Eingabeprozesse entspricht, und ein zugehöriges synaptisches Gewicht so anzupassen, dass das Gewicht gegen einen durch die Signale bestimmten Wert konvergiert,
sodass innerhalb der PCU (300) der Wert eine bedingte Wahrscheinlichkeit zwischen den Eingabeprozessen darstellt.

5. Verfahren nach Anspruch 4, wobei Steuern der Vorrichtung beinhaltet, die Vorrichtung zu veranlassen, eine Manövrieroperation basierend auf der mindestens einen berechneten bedingten Wahrscheinlichkeit durchzuführen.

6. Verfahren nach Anspruch 5, wobei die Vorrichtung eine autonome mobile Plattform (900) ist und die Manövrieroperation eine Kollisionsvermeidungsoperation ist.

7. Computerprogrammprodukt zum Spezifizieren der Steuerung einer Vorrichtung basierend auf einem Bayes'schen Netzwerkmodell (806), wobei das Computerprogrammprodukt umfasst:
einen Bayes'scher neuromorphen Kompilierer (804), der auf einem nichtflüchtigen computerlesbaren Medium verkörpert ist und ein Netzwerkkompositionsmodul aufweist, das dazu konfiguriert ist, eine Vielzahl von probabilistischen Recheneinheiten, PCUs (300), in einer hierarchischen Komposition zu kombinieren, die mehrstufige Abhängigkeiten enthält, wobei der Bayes'sche neuromorphe Kompilierer (804) Anweisungen umfasst, um einen oder mehrere Prozessoren zu veranlassen, folgende Operationen durchzuführen:
Empfangen eines beliebigen Bayes'sches Netzwerkmodells (806) als Eingang;
Erstellen einer spikenden neuronalen Netzwerktopologie und -konfiguration (808) durch Kombinieren der PCUs (300) mit zusätzlichen M Einheiten (306), wobei die Konfiguration (808) das Bayes'sche Netzwerkmodell (806) implementiert und dazu konfiguriert ist, bedingte Wahrscheinlichkeiten des Bayes'schen Netzwerkmodells (806) zu lernen;
unter Verwendung des Netzwerk-Kompositionsmoduls, Lernen bedingter Wahrscheinlichkeiten des Bayes'schen Netzwerkmodells (806) durch die Konfiguration (808) der PCUs (300) und der zusätzlichen M Einheiten (306);
Aufbauen einer Struktur zusätzlicher M Untereinheiten (306) und C Untereinheiten (302) der PCUs (300), die für eine Anfrage an das Bayes'sche Netzwerkmodell (806) gelernte synaptische Gewichte aufweisen, wobei die Struktur dazu konfiguriert ist, eine der Anfrage entsprechende bedingte Wahrscheinlichkeit zu berechnen;
Berechnen, unter Verwendung der Struktur, mindestens einer bedingten Wahrscheinlichkeit, die der Anfrage entspricht; und
Steuern einer Vorrichtung, basierend auf der mindestens einen berechneten bedingten Wahrscheinlichkeit;
wobei die PCUs (300) neuromorphe Rechenschaltungen sind, die dazu konfiguriert sind, die bedingten Wahrscheinlichkeiten zu berechnen, sodass jede PCU (300) eine C Untereinheit (302) und eine M Untereinheit (304) umfasst,
die M Untereinheit (304) eine Multiplizierereinheit ist, die dazu konfiguriert ist, eine logische Verknüpfung zweier Eingabeprozesse zu berechnen und ein Signal auszugeben, das dem gemeinsamen Auftreten der Eingabeprozesse entspricht,
die C Untereinheit (302) eine Konvergenzeinheit ist, die dazu konfiguriert ist, ein Signal zu empfangen, das einer logischen Verknüpfung der zwei Eingabeprozesse entspricht, sowie ein Signal, das einem der Eingabeprozesse entspricht, und ein zugehöriges synaptisches Gewicht so anzupassen, dass das Gewicht gegen einen durch die Signale bestimmten Wert konvergiert,
sodass innerhalb der PCU (300) der Wert eine bedingte Wahrscheinlichkeit zwischen den Eingabeprozessen darstellt.

8. Computerprogrammprodukt nach Anspruch 7, wobei Steuern der Vorrichtung beinhaltet, die Vorrichtung zu veranlassen, eine Manövrieroperation basierend auf der mindestens einen berechneten bedingten Wahrscheinlichkeit durchzuführen.

9. Computerprogrammprodukt nach Anspruch 8, wobei die Vorrichtung eine autonome mobile Plattform (900) ist und die Manövrieroperation eine Kollisionsvermeidungsoperation ist.

## Revendications

1. Système (100) pour spécifier la commande d'un dispositif basé sur un modèle de réseau bayésien (806), le système comprenant :
un compilateur neuromorphique bayésien (804), intégré sur un support non transitoire lisible par ordinateur et présentant un module de composition réseau configuré pour combiner une pluralité d'unités de calcul probabilistes, PCU, (300), en une composition hiérarchique contenant des dépendances à plusieurs niveaux, le compilateur neuromorphique bayésien (804) comprenant des instructions pour amener un ou plusieurs processeurs (104) à effectuer les opérations de :
réception d'un modèle de réseau bayésien arbitraire (806) comme entrée ;
production d'une topologie de réseau neuronal à impulsions et d'une configuration (808), en combinant les PCU (300) avec des unités M supplémentaires (306), dans lequel la configuration (808) met en œuvre le modèle de réseau bayésien (806) et est configurée pour apprendre les probabilités conditionnelles du modèle de réseau bayésien ;
à l'aide du module de composition de réseau, apprentissage des probabilités conditionnelles du modèle de réseau bayésien (806) par la configuration (808) des PCU (300) et des unités M supplémentaires (306) ;
construction d'une structure de sous-unités M supplémentaires (306) et de C sous-unités (302) des PCU (300) ayant appris des poids synaptiques pour une requête concernant le modèle de réseau bayésien (806), dans lequel la structure est configurée pour calculer une probabilité conditionnelle correspondant à la requête ;
calcul, à l'aide de la structure, d'au moins une probabilité conditionnelle correspondant à la requête ; et
commande d'un dispositif en fonction de la au moins une probabilité conditionnelle calculée ;
dans lequel les PCU (300) sont des circuits de calcul neuromorphiques configurés pour calculer les probabilités conditionnelles, de sorte que chaque PCU (300) est composée d'une sous-unité C (302) et d'une sous-unité M (304),
la sous-unité M (304) étant une unité multiplicatrice configurée pour calculer une conjonction logique de deux processus d'entrée et pour produire un signal correspondant à l'occurrence conjointe des processus d'entrée,
la sous-unité C (302) étant une unité de convergence configurée pour recevoir un signal correspondant à une conjonction logique des deux processus d'entrée et un signal correspondant à l'un des processus d'entrée, et pour ajuster un poids synaptique associé de sorte que le poids converge vers une valeur déterminée par lesdits signaux,
de sorte qu'au sein de la PCU (300), cette valeur représente une probabilité conditionnelle entre les processus d'entrée.

2. Système selon la revendication 1, dans lequel la commande du dispositif inclut le fait d'amener le dispositif à effectuer une opération de manœuvre basée sur la au moins une probabilité conditionnelle calculée.

3. Système selon la revendication 2, dans lequel le dispositif est une plateforme mobile autonome (900) et l'opération de manœuvre est une opération d'évitement de collision.

4. Procédé mis en œuvre par ordinateur pour spécifier la commande d'un dispositif basé sur un modèle de réseau bayésien (806), le procédé comprenant les actes de :
utilisation d'un compilateur neuromorphique bayésien (804), intégré sur un support non transitoire lisible par ordinateur et présentant un module de composition réseau configuré pour combiner une pluralité d'unités de calcul probabilistes, PCU, (300), en une composition hiérarchique contenant des dépendances à plusieurs niveaux, le compilateur neuromorphique bayésien (804) comprenant des instructions pour amener un ou plusieurs processeurs à effectuer des opérations de :
réception d'un modèle de réseau bayésien arbitraire (806) comme entrée ;
production d'une topologie de réseau neuronal à impulsions et d'une configuration (808), en combinant les PCU (300) avec des unités M supplémentaires (306), dans lequel la configuration (808) met en œuvre le modèle de réseau bayésien et est configurée pour apprendre les probabilités conditionnelles du modèle de réseau bayésien (806) ;
à l'aide du module de composition de réseau, apprentissage des probabilités conditionnelles du modèle de réseau bayésien (806) par la configuration (808) des PCU (300) et des unités M supplémentaires (306) ;
construction d'une structure de sous-unités M supplémentaires (306) et de sous-unités C (302) des PCU (300) ayant appris des poids synaptiques pour une requête concernant le modèle de réseau bayésien (806), dans lequel la structure est configurée pour calculer une probabilité conditionnelle correspondant à la requête ;
calcul, à l'aide de la structure, d'au moins une probabilité conditionnelle correspondant à la requête ; et
commande d'un dispositif en fonction de la au moins une probabilité conditionnelle calculée ;
dans lequel les PCU (300) sont des circuits de calcul neuromorphiques configurés pour calculer les probabilités conditionnelles, de sorte que chaque PCU (300) est composée d'une sous-unité C (302) et d'une sous-unité M (304),
la sous-unité M (304) étant une unité multiplicatrice configurée pour calculer une conjonction logique de deux processus d'entrée et pour produire un signal correspondant à l'occurrence conjointe des processus d'entrée,
la sous-unité C (302) étant une unité de convergence configurée pour recevoir un signal correspondant à une conjonction logique des deux processus d'entrée et un signal correspondant à l'un des processus d'entrée, et pour ajuster un poids synaptique associé de sorte que le poids converge vers une valeur déterminée par lesdits signaux,
de sorte qu'au sein de la PCU (300), cette valeur représente une probabilité conditionnelle entre les processus d'entrée.

5. Procédé selon la revendication 4, dans lequel la commande du dispositif inclut le fait d'amener le dispositif à effectuer une opération de manœuvre basée sur la au moins une probabilité conditionnelle calculée.

6. Procédé selon la revendication 5, dans lequel le dispositif est une plateforme mobile autonome (900) et l'opération de manœuvre est une opération d'évitement de collision.

7. Produit de programme informatique pour spécifier la commande d'un dispositif basé sur un modèle de réseau bayésien (806), le produit de programme informatique comprenant :
un compilateur neuromorphique bayésien (804), intégré sur un support non transitoire lisible par ordinateur et présentant un module de composition réseau configuré pour combiner une pluralité d'unités de calcul probabilistes, PCU, (300), en une composition hiérarchique contenant des dépendances à plusieurs niveaux, le compilateur neuromorphique bayésien (804) comprenant des instructions pour amener un ou plusieurs processeurs à effectuer des opérations de :
réception d'un modèle de réseau bayésien arbitraire (806) comme entrée ;
production d'une topologie de réseau neuronal à impulsions et d'une configuration (808), en combinant les PCU (300) avec des unités M supplémentaires (306), dans lequel la configuration (808) met en œuvre le modèle de réseau bayésien (806) et est configurée pour apprendre les probabilités conditionnelles du modèle de réseau bayésien (806) ;
à l'aide du module de composition de réseau, apprentissage des probabilités conditionnelles du modèle de réseau bayésien (806) par la configuration (808) des PCU (300) et des unités M supplémentaires (306) ;
construction d'une structure de sous-unités M supplémentaires (306) et de sous-unités C (302) des PCU (300) ayant appris des poids synaptiques pour une requête concernant le modèle de réseau bayésien (806), dans lequel la structure est configurée pour calculer une probabilité conditionnelle correspondant à la requête ;
calcul, à l'aide de la structure, d'au moins une probabilité conditionnelle correspondant à la requête ; et
commande d'un dispositif en fonction de la au moins une probabilité conditionnelle calculée ;
dans lequel les PCU (300) sont des circuits de calcul neuromorphiques configurés pour calculer les probabilités conditionnelles, de sorte que chaque PCU (300) est composée d'une sous-unité C (302) et d'une sous-unité M (304),
la sous-unité M (304) étant une unité multiplicatrice configurée pour calculer une conjonction logique de deux processus d'entrée et pour produire un signal correspondant à l'occurrence conjointe des processus d'entrée,
la sous-unité C (302) étant une unité de convergence configurée pour recevoir un signal correspondant à une conjonction logique des deux processus d'entrée et un signal correspondant à l'un des processus d'entrée, et pour ajuster un poids synaptique associé de sorte que le poids converge vers une valeur déterminée par lesdits signaux,
de sorte qu'au sein de la PCU (300), cette valeur représente une probabilité conditionnelle entre les processus d'entrée.

8. Produit de programme informatique selon la revendication 7, dans lequel la commande du dispositif inclut le fait d'amener le dispositif à effectuer une opération de manœuvre basée sur la au moins une probabilité conditionnelle calculée.

9. Produit de programme informatique selon la revendication 8, dans lequel le dispositif est une plateforme mobile autonome (900) et l'opération de manœuvre est une opération d'évitement de collision.
